# EUROPEAN PATENT SPECIFICATION

(11) **EP 3 629 301 B1**
(45) Date of publication and mention of the grant of the patent: **30.06.2021**
(21) Application number: 18197645.7
(22) Date of filing: 28.09.2018
(51) Int. Cl.: G06T 19/00, G06T 5/00

(54) **RENDERING A DENTAL MODEL IN AN IMAGE**
DARSTELLUNG EINES DENTALEN MODELLS IN EINEM BILD
RENDU D'UN MODÈLE DENTAIRE DANS UNE IMAGE

(43) Date of publication of application: 01.04.2020
(73) Proprietor: Ivoclar Vivadent AG, 9494 Schaan (LI)
(72) Inventor: Lancelle, Marcel, 8049 Zürich (CH); Mörzinger, Roland, 4846 Attersee am Attersee (AT); Degen, Nicolas, 8703 Erlenbach (CH); Sörös, Gabor, 1115 Budapest (HU); Bartolovic, Nemanja, 8046 Zürich (CH)
(74) Representative: Uexküll & Stolberg

(56) References cited:
- US-A1- 2015 350 517
- US-A1- 2018 168 781
- CHEN QIAO ET AL: "An augmented reality based teeth shade matching system", PROCEEDINGS VRCAI. ACM SIGGRAPH INTERNATIONAL CONFERENCE ONVIRTUAL REALITY CONTINUUM AND ITS APPLICATIONS IN INDUSTRY (VRCAI), 1 January 2011 (2011-01-01), page 371, XP055348190, XX DOI: 10.1145/2087756.2087818 ISBN: 978-1-4503-1060-4
- Kapanu AG: "Kapanu-Augmented Reality for the Future of Dentistry.pdf", Youtube, 6 March 2017 (2017-03-06), page 1, XP054979194, Retrieved from the Internet: URL:https://www.youtube.com/watch?v=cIEXAl N_QF4 [retrieved on 2019-03-07]
- SHIVARANJANI S ET AL: "A survey on inpainting techniques", 2016 INTERNATIONAL CONFERENCE ON ELECTRICAL, ELECTRONICS, AND OPTIMIZATION TECHNIQUES (ICEEOT), IEEE, 3 March 2016 (2016-03-03), pages 2934-2937, XP033000927, DOI: 10.1109/ICEEOT.2016.7755236 [retrieved on 2016-11-22]

## Description

The present invention pertains to a computer-implemented method for visualization of virtual three-dimensional models of dentitions in an image or image stream of a person's face. In particular, the described method allows realistic, i.e. naturally looking, visualization of dental models in dental virtual mock-up applications, such as dental augmented reality applications.

In the context of the present invention, the term "denture" is not necessarily restricted to full dentures but also comprises partial dentures, orthodontic situations or adaptations, or dental restorations such as dental prostheses, including crowns, crown lays, veneers, inlays and onlays, bridges, dental implants, and implant restorations. Accordingly, the term "dental model" includes all models of dental prostheses - such as models of complete and partial dentures - that are used for prosthodontic purposes.

For dentists and patients, it is of interest to get a visual impression of the appearance of the patient's face with a modified dental situation, i.e. to visualize the modified dental situation in an image of the face of the patient. Also, the appearance during or after a dental treatment may be of importance for the patient before deciding to undergo such treatment. For this purpose, a virtual preview (virtual mock-up) of the dentition modified by dental treatment is helpful for the dentist and may also be used in the course of interactively modifying the treatment plan to get the most favourable aesthetic results.

In the Article CHEN QIAO ET AL: "An augmented reality based teeth shade matching system", PROCEEDINGS VRCAI. ACM SIGGRAPH INTERNATIOAL CONFERENCE ON VIRTUAL REALITY CONTINUUM AND ITS APPLICATIONS IN INDUSTRY (VRCAI), 1 January 2011 (2011-01-01), page 37, XP055348190, XX DOI: 10.1145/2087756.2087818 ISBN: 978-1-4503-1060-4, an augmented reality based teeth shade matching system is described which helps dentists to verify the correctness of teeth shade matching and to evaluate the acceptance of virtual teeth in cosmetic dentistry. The appearance of teeth is captured by a modified camera based on the measurements from cosmetic dentistry. After generating the shade matching map of teeth, a subsurface scattering rendering model is employed to synthesize the photorealistic virtual tooth. The virtual tooth is projected to the original one to test the matching quality. Experimental results demonstrate that the system can improve the efficiency and accuracy of dentists' analysis of teeth color. The preamble of claim 1 is based on this article.

In the video of Kapanu AG: "Kapanu-Augmented Reality for the Future of Dentistry.pdf", Youtube, 6 March 2017 (2017-03-06), page 1, XP054979194, Retrieved from the Internet: URL:https://www.youtube.com/watch? V=clEXAIN_QF4 [retrieved on 2019-03-07] various examples are shown where rendered images of digital models of dentures are overlaid in a picture or video showing a patients face to provide a visual impression of the denture according to a (possibly modified) digital model of the denture.

In dental virtual mock-up applications, virtual teeth are shown in a photo or video of a person's face or part thereof. Realistic visualization is important in this field, as humans are very sensitive to deviations from reality in human faces. This is a well-known problem called the "uncanny valley".

Overlaying a virtual dental model over an image of a face or mouth can lead to unsatisfying results when existing teeth are still visible in the image, e. g. because the existing teeth are larger than their virtual replacements.

It is therefore an object of the present invention to provide an improved computer-implemented method that allows visualization of a virtual three-dimensional dental model, e. g. a model of a full or partial denture, overlaid over an image of a face or mouth.

It is another object to provide such a method that allows overcoming or reducing the uncanny valley problem.

It is a further object to provide such a method wherein existing teeth in the image do not distract or disturb a user's perception of the visualized dental model.

It is another object to provide such a method that allows realistic rendering of the model in real-time, particularly in augmented-reality (AR) applications.

It is another object to provide such a method that can be performed on a mobile device with limited computing power.

It is another object to provide such a method that is performed fully or semi-automatically.

It is a further object to provide a handheld mobile device for performing such a method.

At least one of these objects is achieved by the method of claim 1, the mobile device of claim 14 and/or one of the dependent claims of the present application.

A first aspect of the invention pertains to a method for visualization of a virtual dental model in an image of a face, the image showing at least an inner mouth region of the face, the inner mouth region comprising teeth and a mouth cavity background. The method comprises:
- using an inpainting algorithm to compute, based on background pixels corresponding to the mouth cavity background, computed background pixels for at least a part of tooth pixels of the image, the tooth pixels corresponding to the teeth, and to replace at least a part of the tooth pixels by computed background pixels, at least partially removing the teeth from the image; and
- visualizing the image with the at least partially removed teeth, wherein the image is overlaid with a representation of the dental model.

According to one embodiment, the method comprises using a recognition algorithm to determine in the image background pixels corresponding to the mouth cavity background and tooth pixels corresponding to the teeth, wherein the mouth cavity background comprises at least a tongue and/or a palate. In another embodiment, the mouth cavity background also comprises gum.

According to another embodiment, the method comprises using a recognition algorithm to determine in a previously captured image of the same face background pixels corresponding to the mouth cavity background. In particular, in the previously captured image more of the mouth cavity background is visible than in the image. For instance, the image and the previously captured image can be part of the same image stream.

In one embodiment, the recognition algorithm is also used to determine in the image tooth pixels corresponding to the teeth.

According to one embodiment of the method, computing the computed background pixels comprises a stretching of a texture of the mouth cavity background along a vertical direction of the face in image space. The vertical direction e. g. can be defined by a direction of nose to chin or - vice versa - of chin to nose.

According to one embodiment, a three-dimensional proxy geometry is used for the stretching of the texture of the mouth cavity background, wherein the proxy geometry at least roughly follows an arch form slightly extending beyond the teeth.

According to another embodiment, a fragment shader, for instance using a texel lookup downwards with a weighted vector length, is used for the stretching of the texture of the mouth cavity background.

According to yet another embodiment, a distance in the image between teeth of the lower jaw and the upper jaw is determined, wherein the stretching of the texture of the mouth cavity background is performed only if the distance lies above a predetermined threshold.

According to a further embodiment, a necessary stretching degree is determined, the necessary stretching degree being that intensity of stretching of the texture of the mouth cavity background that is necessary to replace all tooth pixels that would be visible when the image is overlaid with the dental model, and the texture of the mouth cavity background is stretched at least with the determined necessary stretching degree.

According to one embodiment of the method, the virtual dental model is an upper jaw dental model, wherein the method is performed only for the upper jaw, only tooth pixels corresponding to the teeth of the upper jaw being determined and replaced.

According to another embodiment of the method, the virtual dental model is a lower jaw dental model, wherein the method is performed only for the lower jaw, only tooth pixels corresponding to the teeth of the lower jaw being determined and replaced.

According to yet another embodiment of the method, the virtual dental model comprises an upper jaw dental model and a lower jaw dental model, wherein the determining and replacing tooth pixels corresponding to the teeth of the upper jaw and determining and replacing tooth pixels corresponding to the teeth of the lower jaw are performed subsequently.

According to another embodiment, the method comprises determining, before using the inpainting algorithm, whether tooth pixels are visible when the image is overlaid with the dental model. If the virtual dental model is an upper jaw dental model or a lower jaw dental model, the visibility is determined only for those tooth pixels that correspond to teeth of a jaw at which teeth of the virtual dental model are positioned.

According to another embodiment of the method, the image is part of an image stream, and the method is performed in real time for at least a multitude of images of the image stream.

In one embodiment the method further comprises capturing the image stream by means of a camera and visualizing the dental model and the two-dimensional image on a displaying device to a user, particularly wherein the face is the face of the user.

If the camera and the displaying device are part of the same mobile device, according to one embodiment, the method is performed by means of one or more algorithms installed on a computing unit of said mobile device.

According to another embodiment of the method, the virtual dental model is in a polygon mesh format and comprises a plurality of vertices.

A second aspect of the invention pertains to a mobile device comprising a camera and a display that are arranged so that images of a user's face are capturable by the camera while the user watches the display - e. g. comprising a so-called selfie camera. The device comprises a computing unit with at least one algorithm that is adapted to perform the method according to the first aspect.

A further aspect of the invention pertains to a computer programme product comprising programme code which is stored on a machine-readable medium, or being embodied by an electromagnetic wave comprising a programme code segment, and having computer-executable instructions for performing the method according to the first aspect, in particular when executed on the computing unit of the mobile device according to the second aspect.

The invention in the following will be described in detail by referring to exemplary embodiments that are accompanied by figures, in which:
- Fig. 1: illustrates an exemplary embodiment of a computer-implemented method for visualization of a 3D dentition model in an image of a person's face;
- Figs. 2a-d: illustrate a first exemplary embodiment of a method according to the invention; and
- Figs. 3a-d: illustrate a second exemplary embodiment of a method according to the invention.

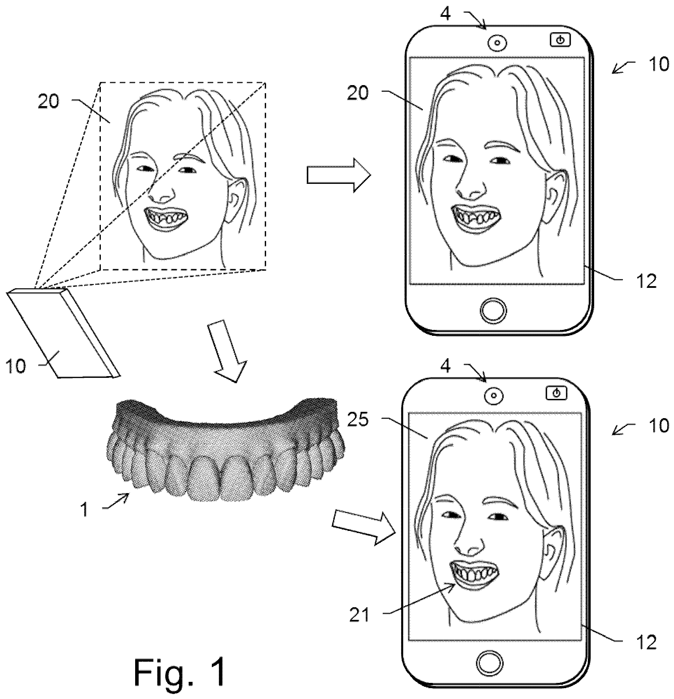

Figure 1 illustrates a computer-implemented method for visualization of a 3D dentition model in an image of a person's face according to an exemplary embodiment of the invention.

According to the shown embodiment, an image 20 of the person's face is captured by means of a camera 4. In this embodiment, the camera 4 is part of a handheld mobile device 10 such as a smartphone. The device 10 comprises a display 12 which is enabled to display the image 20 in real time to the user, i.e. the patient whose image is captured. Data of a three-dimensional (3D) virtual dentition model 1 is provided in a data storage of the mobile device 10. An algorithm being provided in a computing unit of the mobile device 10 is adapted to fit the dentition model 1 into the image to provide an augmented-reality (AR) image 25 on the display 12, wherein the rendered dentition model 21 is displayed in the inner mouth region of the face. The processing can be performed offline on an image or video or in real time on a live camera image, thus providing a live augmented-reality application.

Humans are very sensitive to even slight deviations from reality in human faces. To overcome this "uncanny valley" problem in a visualization of virtual teeth in a photo or video of a face, realistic visualization of the 3D rendered content is crucial.

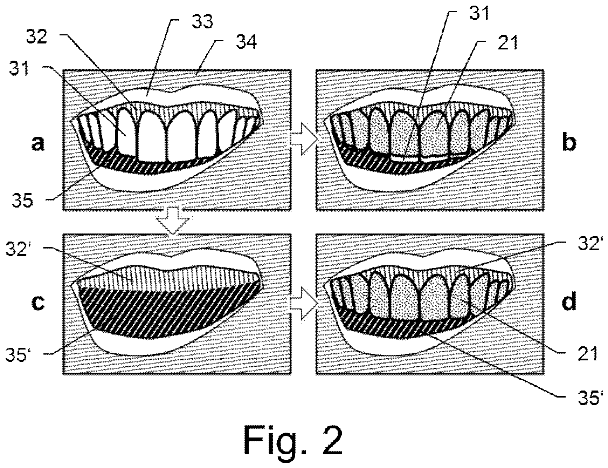

Figures 2a-d show four images of a mouth region of a person, e. g. of the face on the image of Figure 1. Figure 2a shows the original mouth region comprising the original teeth 31 of the upper jaw, the gum (or gingiva) 32, lips 33 and surrounding facial tissue 34. Figure 2a also shows a mouth cavity background 35, i.e. the portion of the mouth cavity lying behind the teeth 31, comprising tongue and palate of the person.

Figure 2b shows a 2D representation of a virtual 3D denture model 21 being overlaid over the image. As the teeth of the denture 21 are shorter than the original teeth 31, the latter are still visible in the image, which leads to unsatisfactory results. On the one hand, it is difficult to determine how a real denture produced according to the virtual denture 21 would look without the existing teeth. On the other hand, the "uncanny valley" effect may occur, leading to a psychologically motivated rejection of an otherwise perfect dental model.

Figures 2c and 2d illustrate a first exemplary embodiment of a method according to the invention. Pixels belonging to original teeth 31 of Figure 2a are identified and replaced by pixels that form a plausible, computed background of these teeth 31. The intermediate result is shown in Figure 2c, where the teeth have been replaced by pixels that appear to be gum and background, the image thus showing an extended gum 32' and an extended mouth cavity background 35'. In Figure 2d, the virtual denture representation 21 is overlaid over the image.

The method may comprise identifying the boundaries of the inner mouth region in the imaged face. The inner mouth region may comprise that part of the imaged face that lies inside the lips 33. The inner mouth region can either be defined by the user, e. g. by selecting the area in the image 20, or be automatically identified by means of a feature recognition algorithm.

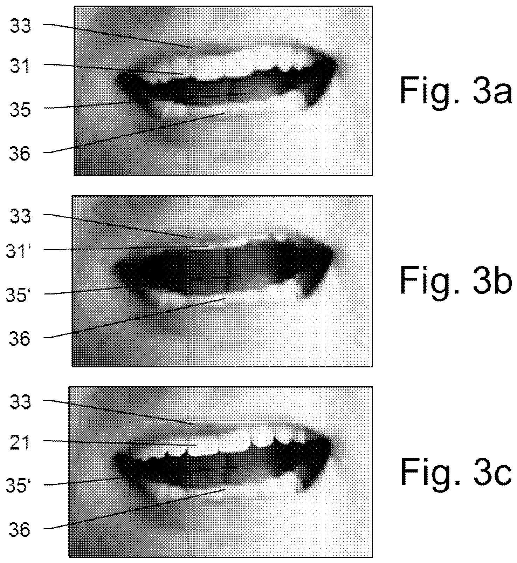

Figures 3a-c illustrate a second exemplary embodiment of a method according to the invention. In this embodiment, teeth 31 of an upper jaw are to be replaced by a denture, whereas the teeth 36 of the lower jaw will not be replaced. Accordingly, a virtual dental model for the upper jaw is provided, a 2D representation 21 of which needs to be overlaid over the image of the mouth.

Figure 3a shows the original image of the mouth with the original teeth 31 of the upper jaw, lips 33, a mouth cavity background 35 comprising the tongue, and also teeth 36 of the lower jaw. The original teeth 31 are longer than those of the model and need to be shortened, i.e. partially replaced by plausible, computed content, in order to not disturb the visualization. The lips 33 and lower teeth 36 should not be amended.

A recognition algorithm is used to determine in the image tooth pixels corresponding to the teeth 31 of the upper jaw and background pixels corresponding to the mouth cavity background 35. Afterwards, an inpainting algorithm is used to compute, based on the determined background pixels, plausible computed background pixels for at least a part of the tooth pixels, and to replace at least a part of the tooth pixels by computed background pixels, i.e. at least partially removing the teeth 31 from the image.

In the embodiment presented here, computing the computed background pixels comprises a stretching of existing texture of the mouth, such as the mouth cavity background 35. For doing so, a 3D proxy geometry can be used that roughly follows the arch form of the upper jaw and slightly extends beyond the teeth 31 of the upper jaw. A fragment shader can then be used to stretch the mouth cavity background 35. The stretching direction preferably is along the vertical direction of the face in image space. This is done by a texel lookup downwards (e. g. based on a direction of nose to chin) with a weighted vector length.

Optionally, a distance between the teeth 31 of the upper jaw and the teeth 36 of the lower jaw in the image can be determined, i.e. if the teeth were closed the distance would be zero. With a certain threshold of open teeth, the stretching is applied gradually.

If tooth pixels of the lower jaw would be hit, the lookup vector can be shortened iteratively to try to find another suitable pixel colour.

Figure 3b shows as an intermediate result the inpainted image with shortened, i.e. partially removed, teeth 31' and stretched mouth cavity background 35'. Having partially removed the original teeth 31, the dental model can be overlaid. Figure 3c shows the inpainted image of Figure 3b, wherein the virtual teeth 21 are overlaid so that only the virtual teeth are visible, although these are shorter than the real teeth 31 of Figure 3a, resulting in a realistic visualization of the dental model in the image.

Although the method is described only for the upper jaw it can likewise be applied to the lower jaw or both jaws.

In one embodiment, for computing the background pixels the same image that is to be visualized is used. In this case, advantageously, no further images need to be captured.

However, sometimes not enough of a mouth cavity background is visible in this image to create a realistic background for the removed tooth pixels.

Therefore, in another embodiment, the background pixels of another image of the same face can be used. In particular, this image has been captured previously. In this case, advantageously, an image can be used, wherein the mouth is opened wider so that more of the background is visible. This facilitates deleting the teeth in the visualized image. For instance, if sufficient mouth cavity background is visible no or less stretching needs to be applied to the mouth cavity background of the previously captured image to replace the tooth pixels in the visualized image. It is further not necessary to determine background pixels and tooth pixels in the visualized image, as it could be sufficient to determine the boundaries of the inner mouth region (e. g. that part of the imaged face that lies inside the lips) and replace the complete inner mouth region (i.e. teeth and background) of the visualized image with plausible, computed background pixels from the previously captured image. Optionally, it can be determined whether the visible mouth cavity background in the image (i.e. the visualized image) is sufficient for creating the plausible background. If it is not sufficient, a previous image or a number of previously captured images, e. g. from an image stream, can be checked with respect to their sufficiency of visible mouth cavity background. Alternatively, i.e. if there are no previous images or the mouth cavity background also in these images is not sufficient, the imaged patient can be prompted to open the mouth to allow capturing an image with sufficient visible mouth cavity background. In particular, this request can be displayed on a display in real time, e. g. on the display 12 of the handheld mobile device 10 of Figure 1.

In an exemplary embodiment, a method for visualization of a virtual dental model superimposed in an image of a face is provided. The image of the face includes at least a portion of an inner mouth region having teeth and a mouth cavity background. The method includes obtaining a virtual dental model. The dental model comprises a three-dimensional representation of a denture, implant(s), veneer(s), or other dental prosthesis. The method includes identifying a background region of the image corresponding to the mouth cavity background and a tooth region corresponding to the teeth. A processor is used to compute plausible computed background pixels for at least a portion of the tooth region based on the background region. A revised image is generated using the processor, where the revised image is based on the image having at least the portion of the tooth region replaced with the computed background pixels. In this way, the teeth are at least partially removed from the revised image. A display is used to display a rendering of the dental model superimposed within the mouth cavity of the revised image.

In the context of the present invention, the term "denture" is not necessarily restricted to full dentures but also comprises partial dentures or orthodontic situation/adaptations or dental restorations such as dental prostheses, including crowns, crown lays, veneers, inlays and onlays, bridges, dental implants, implant restorations. Accordingly, the term "dental model" includes all models of dental prostheses as well as the patient situation that could be partial or fully edentulous - such as models of complete and partial dentures - that are used for prosthodontic purposes.

In some embodiments, the present disclosure is implemented using a system having a camera, a processor, an electronic data storage unit, and a display. The camera can be a standard camera, an infrared dot-projection detector, flood illuminator camera, structured-light three-dimensional scanner, standard infrared detector, ultrasonic imaging device, Doppler detector, or any other suitable visualization system capable of capturing information related to a patient's dentition. The processor can be a single processor having one or more cores, or a plurality of processors connected by a bus, network, or other data link. The electronic data storage unit can be any form of non-transitory computer-readable storage medium suitable for storing the data produced by the system. The display can be any display suitable for displaying a digital color or grayscale image.

In some embodiments, the camera, processor, electronic data storage unit, and digital display are components of a single device. The single device may be a smartphone, tablet, laptop computer, personal digital assistant, or other computing device.

In some embodiments, the processor is in communication over a network, which could be wired or wireless, with an external processor used for performing one or more calculation steps and/or a network-attached electronic data storage unit. In some embodiments, the present disclosure makes use of cloud computing to perform one or more calculations steps remotely and/or remote storage to enable the storage of data remotely for collaborative or remote analysis. In some embodiments, the system comprises a plurality of graphical user interfaces to permit multiple users to view or analyze the same data.

In some embodiments, the system operates to provide one or more users with a visualization of a virtual dental model of a patient's teeth, which may be altered to visualize the effect of one or more dental or orthodontic alterations. In some embodiments, this allows the one or more users to visualize a "before" dentition image, i.e., the appearance of a patient's dentition prior to a dental or orthodontic procedure, and an "after" dentition image, i.e., a representation of the expected appearance of a patient's dentition after a proposed dental or orthodontic procedure.

In some embodiments, the system operates by capturing information related to a patient's dentition using a camera, creating a model of the patient's dentition on a processor, fitting a model of a proposed post-alteration dentition to the patient's dentition on the processor, coloring the model of the proposed post-alteration dentition to match an expected real post-alteration coloration, and displaying the fitted model of the proposed post-alteration dentition in place of the patient's actual dentition on a display which otherwise shows the patient's actual facial features. The information related to a patient's dentition, the model of the patient's dentition, and the model of the proposed post-alteration dentition may be stored on an electronic data storage unit. In some embodiments, the operations are performed in real-time.

In some embodiments, a user interface is configured such that a user may view the "before" dentition image and the "after" dentition image simultaneously either side-by-side or with a full or partial overlay.

Where used herein, the term "non-transitory" is a limitation on the computer-readable storage medium itself-that is, it is tangible and not a signal-as opposed to a limitation on the persistence of data storage. A non-transitory computer-readable storage medium does not necessarily store information permanently. Random access memory (which may be volatile, non-volatile, dynamic, static, etc.), read-only memory, flash memory, memory caches, or any other tangible, computer-readable storage medium, whether synchronous or asynchronous, embodies it.

Although the invention is illustrated above, partly with reference to some preferred embodiments, it must be understood that numerous modifications and combinations of different features of the embodiments can be made. All of these modifications lie within the scope of the appended claims.

## Claims

1. Method for visualization of a virtual dental model (1) in an image (20) of a face comprising at least an inner mouth region of the face, the inner mouth region comprising teeth (31) and a mouth cavity background (35), **characterized in that** the method comprises the steps of:
- using an inpainting algorithm
- to compute, based on background pixels corresponding to the mouth cavity background (35), computed background pixels for at least a part of tooth pixels of the image (20), the tooth pixels corresponding to the teeth (31), and
- to replace at least a part of the tooth pixels by computed background pixels, at least partially removing the teeth (31) from the image (20); and
- visualizing the image (20) with the at least partially removed teeth (31'), wherein the image (20) is overlaid with a representation (21) of the dental model (1).

2. Method according to claim 1,
**characterized by**
using a recognition algorithm to determine in the image (20) background pixels corresponding to the mouth cavity background (35) and tooth pixels corresponding to the teeth (31), wherein the mouth cavity background (35) comprises at least a tongue and/or a palate.

3. Method according to claim 1,
**characterized by**
using a recognition algorithm to determine in a previously captured image of the same face background pixels corresponding to the mouth cavity background (35), in particular wherein more of the mouth cavity background (35) is visible in the previously captured image than in the image (20), wherein the mouth cavity background (35) comprises at least a tongue and/or a palate.

4. Method according to claim 3,
**characterized by**
using the recognition algorithm to determine in the image (20) tooth pixels corresponding to the teeth (31) .

5. Method according to any one of the preceding claims,
**characterized in that**
computing the computed background pixels comprises a stretching of a texture of the mouth cavity background (35) along a vertical direction of the face in image space, particularly wherein the vertical direction is a direction of nose to chin or a direction of chin to nose.

6. Method according to claim 5,
**characterized in that**
- a three-dimensional proxy geometry is used for the stretching of the texture of the mouth cavity background (35), wherein the proxy geometry at least roughly follows an arch form slightly extending beyond the teeth (31); and/or
- a fragment shader, particularly using a texel lookup downwards with a weighted vector length, is used for the stretching of the texture of the mouth cavity background (35).

7. Method according to claim 5 or claim 6,
**characterized in that**
a distance in the image (20) between teeth (31) of the lower jaw and the upper jaw is determined, wherein the stretching of the texture of the mouth cavity background (35) is performed only if the distance lies above a predetermined threshold.

8. Method according to any one of claims 5 to 7,
**characterized in that**
- a necessary stretching degree is determined, the necessary stretching degree being that intensity of stretching of the texture of the mouth cavity background (35) that is necessary to replace all tooth pixels that would be visible when the image (20) is overlaid with the dental model (1); and
- the texture of the mouth cavity background (35) is stretched at least with the determined necessary stretching degree.

9. Method according to any one of the preceding claims,
**characterized in that**
the virtual dental model (1)
- is an upper jaw dental model, wherein the method is performed only for the upper jaw, only tooth pixels corresponding to the teeth (31) of the upper jaw being determined and replaced; or
- is a lower jaw dental model, wherein the method is performed only for the lower jaw, only tooth pixels corresponding to the teeth (31) of the lower jaw being determined and replaced; or
- comprises an upper jaw dental model and a lower jaw dental model, wherein the determining and replacing tooth pixels corresponding to the teeth (31) of the upper jaw and determining and replacing tooth pixels corresponding to the teeth (31) of the lower jaw are performed subsequently.

10. Method according to any one of the preceding claims,
**characterized by**
determining, before using the inpainting algorithm, whether tooth pixels are visible when the image (20) is overlaid with the dental model (1), wherein the visibility is determined only for those tooth pixels that correspond to teeth (31) of a jaw at which teeth of the virtual dental model (1) are positioned.

11. Method according to any one of the preceding claims,
**characterized in that**
the image (20) is part of an image stream, and the method is performed in real time for at least a multitude of images (20) of the image stream.

12. Method according to claim 11,
**characterized in that**
the method further comprises capturing the image stream by means of a camera (4) and visualizing the dental model (1) and the two-dimensional image (20) on a displaying device (12) to a user, particularly wherein the face is the face of the user,
in particular wherein the camera (4) and the displaying device (12) are part of the same mobile device (10), wherein the method is performed by means of one or more algorithms installed on a computing unit of the mobile device (10).

13. Method according to any one of the preceding claims,
**characterized in that**
the virtual dental model (1) is in a polygon mesh format and comprises a plurality of vertices.

14. Mobile device (10) comprising a camera (4) and a display (12) that arranged so that images (20) of a user's face are capturable by the camera (4) while the user watches the display (12),
**characterized in that**
the device comprises a computing unit with at least one algorithm that is adapted to perform the method of one of the preceding claims.

15. Computer programme product comprising programme code which is stored on a machine-readable medium, or being embodied by an electromagnetic wave comprising a programme code segment, and having computer-executable instructions for performing the method according to any one of claims 1 to 13, in particular when executed on the computing unit of the mobile device (10) according to claim 14.

## Patentansprüche

1. Verfahren zum Visualisieren eines virtuellen Dentalmodells (1) in einem Bild (20) eines Gesichts mit wenigstens einer inneren Mundregion des Gesichts, wobei die innere Mundregion Zähne (31) und einen Mundhöhlenhintergrund (35) enthält, **dadurch gekennzeichnet, dass** das Verfahren die Schritte beinhaltet:
- Verwenden eines Inpainting-Algorithmus,
- um basierend auf Hintergrund-Pixeln, die dem Mundhöhlenhintergrund (35) entsprechen, berechnete Hintergrund-Pixel für wenigstens einen Teil von Zahn-Pixeln des Bildes (20) zu berechnen, wobei die Zahn-Pixel den Zähnen (31) entsprechen, und
- um wenigstens einen Teil der Zahn-Pixel durch berechnete Hintergrundpixel zu ersetzen, was die Zähne (31) zumindest teilweise aus dem Bild (20) entfernt, und
- Visualisieren des Bildes (20) mit den wenigstens teilweise entfernten Zähnen (31'), wobei dem Bild (20) eine Repräsentation (21) des Dentalmodells (1) überlagert wird.

2. Verfahren nach Anspruch 1,
**gekennzeichnet durch**
Verwenden eines Erkennungsalgorithmus, um in dem Bild (20) Hintergrund-Pixel, die dem Mundhöhlenhintergrund (35) entsprechen, und Zahn-Pixel, die den Zähnen (31) entsprechen, zu bestimmen, wobei der Mundhöhlenhintergrund (35) wenigstens eine Zunge und/oder einen Gaumen umfasst.

3. Verfahren nach Anspruch 1,
**gekennzeichnet durch**
Verwenden eines Erkennungsalgorithmus, um in einem zuvor aufgenommenen Bild desselben Gesichts dem Mundhöhlenhintergrund (35) entsprechende Hintergrund-Pixel zu bestimmen, insbesondere wobei in dem zuvor aufgenommenen Bild mehr von dem Mundhöhlenhintergrund (35) sichtbar ist als in dem Bild (20), wobei der Mundhöhlenhintergrund (35) wenigstens eine Zunge und/oder einen Gaumen umfasst.

4. Verfahren nach Anspruch 3,
**gekennzeichnet durch**
Verwenden des Erkennungsalgorithmus, um in dem Bild (20) den Zähnen (31) entsprechende Zahn-Pixel zu bestimmen.

5. Verfahren nach einem der vorhergehenden Ansprüche,
**dadurch gekennzeichnet, dass**
das Berechnen der berechneten Hintergrund-Pixel eine Dehnung einer Textur des Mundhöhlenhintergrunds (35) entlang einer vertikalen Richtung des Gesichts im Bildraum beinhaltet, insbesondere wobei die vertikale Richtung eine Richtung von der Nase zum Kinn oder eine Richtung vom Kinn zur Nase ist.

6. Verfahren nach Anspruch 5,
**dadurch gekennzeichnet, dass**
- zum Dehnen der Textur des Mundhöhlenhintergrunds (35) eine dreidimensionale Platzhaltergeometrie verwendet wird, wobei die Platzhaltergeometrie wenigstens näherungsweise einer Bogenform folgt, die sich leicht über die Zähne (31) hinaus erstreckt, und/oder
- ein Fragment-Shader, insbesondere unter Verwendung von Texel-Lookup nach unten mit einer gewichteten Vektorlänge, zum Dehnen der Textur des Mundhöhlenhintergrunds (35) verwendet wird.

7. Verfahren nach Anspruch 5 oder Anspruch 6,
**dadurch gekennzeichnet, dass**
in dem Bild (20) eine Distanz zwischen Zähnen (31) des Unterkiefers und des Oberkiefers bestimmt wird, wobei das Dehnen der Textur des Mundhöhlenhintergrunds (35) nur ausgeführt wird, wenn die Distanz oberhalb einer vorgegebenen Schwelle liegt.

8. Verfahren nach einem der Ansprüche 5 bis 7,
**dadurch gekennzeichnet, dass**
- ein notwendiger Dehnungsgrad bestimmt wird, wobei der notwendige Dehnungsgrad diejenige Stärke der Dehnung der Textur des Mundhöhlenhintergrunds (35) ist, die benötigt wird, um alle Zahn-Pixel, die sichtbar wären, wenn dem Bild (20) das Dentalmodell (1) überlagert wird, zu ersetzen, und
- die Textur des Mundhöhlenhintergrunds (35) wenigstens um den bestimmten benötigten Dehnungsgrad gedehnt wird.

9. Verfahren nach einem der vorhergehenden Ansprüche,
**dadurch gekennzeichnet, dass**
das virtuelle Dentalmodell (1)
- ein Oberkiefer-Dentalmodell ist, wobei das Verfahren nur für den Oberkiefer durchgeführt wird, wobei nur Zahn-Pixel, die den Zähnen (31) des Oberkiefers entsprechen, bestimmt und ersetzt werden, oder
- ein Unterkiefer-Dentalmodell ist, wobei das Verfahren nur für den Unterkiefer durchgeführt wird, wobei nur Zahn-Pixel, die den Zähnen (31) des Unterkiefers entsprechen, bestimmt und ersetzt werden, oder
- ein Oberkiefer-Dentalmodell und ein Unterkiefer-Dentalmodell umfasst, wobei das Bestimmen und Ersetzen von Zahn-Pixeln, die den Zähnen (31) des Oberkiefers entsprechen, und das Bestimmen und Ersetzen von Zahn-Pixeln, die den Zähnen (31) des Unterkiefers entsprechen, aufeinanderfolgend ausgeführt wird.

10. Verfahren nach einem der vorhergehenden Ansprüche,
**gekennzeichnet durch**
Feststellen, bevor der Inpainting-Algorithmus angewendet wird, ob Zahn-Pixel sichtbar sind, wenn dem Bild (20) das Dentalmodell (1) überlagert wird, wobei die Sichtbarkeit nur für solche Zahn-Pixel festgestellt wird, die den Zähnen (31) eines Kiefers entsprechen, an dem die Zähne des virtuellen Dentalmodells (1) positioniert sind.

11. Verfahren nach einem der vorhergehenden Ansprüche,
**dadurch gekennzeichnet, dass**
das Bild (20) Teil eines Bildstroms ist und das Verfahren in Echtzeit für wenigstens eine Vielzahl von Bildern (20) des Bildstroms durchgeführt wird.

12. Verfahren nach Anspruch 11,
**dadurch gekennzeichnet, dass**
das Verfahren weiter beinhaltet, den Bildstrom mittels einer Kamera (4) aufzunehmen und das Dentalmodell (1) und das zweidimensionale Bild (20) auf einer Anzeigevorrichtung (12) für einen Benutzer zu visualisieren, wobei insbesondere das Gesicht das Gesicht des Benutzers ist, insbesondere wobei die Kamera (4) und die Anzeigevorrichtung (12) Teil desselben Mobilgeräts (10) sind,
wobei das Verfahren mittels eines oder mehrerer Algorithmen durchgeführt wird, die in einer Recheneinheit des Mobilgeräts (10) installiert sind.

13. Verfahren nach einem der vorhergehenden Ansprüche,
**dadurch gekennzeichnet, dass**
das virtuelle Dentalmodell (1) in einem Polygonnetz-Format vorliegt und eine Vielzahl von Vertices aufweist.

14. Mobilgerät (10) mit einer Kamera (4) und einer Anzeige (12), die so angeordnet sind, dass Bilder (20) eines Benutzergesichts durch die Kamera (4) aufnehmbar sind, während der Benutzer die Anzeige (12) betrachtet,
**dadurch gekennzeichnet, dass**
das Gerät eine Recheneinheit mit wenigstens einem Algorithmus aufweist, der dazu eingerichtet ist, um das Verfahren der vorhergehenden Ansprüche auszuführen.

15. Computerprogrammprodukt, das Programmcode enthält, der auf einem maschinenlesbaren Medium gespeichert ist, oder das durch eine elektromagnetische Welle repräsentiert wird, die ein Programmcodesegment enthält, und der durch einen Computer ausführbare Instruktionen zum Ausführen des Verfahrens nach einem der Ansprüche 1 bis 13 hat, insbesondere wenn er in der Recheneinheit des Mobilgeräts (10) gemäß Anspruch 14 ausgeführt wird.

## Revendications

1. Procédé pour une visualisation d'un modèle dentaire (1) virtuel dans une image (20) d'un visage comprenant au moins une région buccale intérieure du visage, la région buccale intérieure comprenant des dents (31) et un fond de cavité buccale (35), **caractérisé en ce que** le procédé comprend les étapes consistant à :
- utiliser un algorithme de retouche
- pour calculer, sur la base de pixels de fond correspondant au fond de cavité buccale (35), des pixels de fond calculés pour au moins une partie de pixels de dents de l'image (20), les pixels de dents correspondant aux dents (31), et
- pour remplacer au moins une partie des pixels de dents par des pixels de fond calculés, supprimant au moins partiellement les dents (31) de l'image (20) ; et
- visualiser l'image (20) avec les dents au moins partiellement supprimées (31'), dans lequel l'image (20) est recouverte d'une représentation (21) du modèle dentaire (1).

2. Procédé selon la revendication 1,
**caractérisé par**
une utilisation d'un algorithme de reconnaissance pour déterminer dans l'image (20) des pixels de fond correspondant au fond de cavité buccale (35) et des pixels de dents correspondant aux dents (31), dans lequel le fond de cavité buccale (35) comprend au moins une langue et/ou un palais.

3. Procédé selon la revendication 1,
**caractérisé par**
une utilisation d'un algorithme de reconnaissance pour déterminer dans une image capturée au préalable du même visage des pixels de fond correspondant au fond de cavité buccale (35), en particulier dans lequel davantage du fond de cavité buccale (35) est visible dans l'image capturée au préalable que dans l'image (20), dans lequel le fond de cavité buccale (35) comprend au moins une langue et/ou un palais.

4. Procédé selon la revendication 3,
**caractérisé par**
une utilisation de l'algorithme de reconnaissance pour déterminer dans l'image (20) des pixels de dents correspondant aux dents (31).

5. Procédé selon l'une quelconque des revendications précédentes,
**caractérisé en ce que**
un calcul des pixels de fond calculés comprend un étirement d'une texture du fond de cavité buccale (35) le long d'une direction verticale du visage dans un espace image, en particulier dans lequel la direction verticale est une direction de nez vers menton ou une direction de menton vers nez.

6. Procédé selon la revendication 5,
**caractérisé en ce que**
- une géométrie de proxy tridimensionnelle est utilisée pour l'étirement de la texture du fond de cavité buccale (35), dans lequel la géométrie de proxy suit au moins approximativement une forme d'arc s'étendant légèrement au-delà des dents (31) ; et/ou
- un nuanceur de fragments, en particulier utilisant une consultation de texels vers le bas avec une longueur de vecteur pondérée, est utilisé pour l'étirement de la texture du fond de cavité buccale (35).

7. Procédé selon la revendication 5 ou la revendication 6,
**caractérisé en ce que**
une distance dans l'image (20) entre des dents (31) de la mâchoire inférieure et de la mâchoire supérieure est déterminée, dans lequel l'étirement de la texture du fond de cavité buccale (35) est réalisé seulement si la distance se situe au-dessus d'un seuil prédéterminé.

8. Procédé selon l'une quelconque des revendications 5 à 7,
**caractérisé en ce que**
- un degré d'étirement nécessaire est déterminé, le degré d'étirement nécessaire étant l'intensité d'étirement de la texture du fond de cavité buccale (35) qui est nécessaire pour remplacer tous les pixels de dents qui seraient visibles lorsque l'image (20) est recouverte du modèle dentaire (1) ; et
- la texture du fond de cavité buccale (35) est étirée au moins avec le degré d'étirement nécessaire déterminé.

9. Procédé selon l'une quelconque des revendications précédentes,
**caractérisé en ce que**
le modèle dentaire (1) virtuel
- est un modèle dentaire de mâchoire supérieure, dans lequel le procédé est réalisé seulement pour la mâchoire supérieure, seulement des pixels de dents correspondant aux dents (31) de la mâchoire supérieure étant déterminés et remplacés ; ou
- est un modèle dentaire de mâchoire inférieure, dans lequel le procédé est réalisé seulement pour la mâchoire inférieure, seulement des pixels de dents correspondant aux dents (31) de la mâchoire inférieure étant déterminés et remplacés ; ou
- comprend un modèle dentaire de mâchoire supérieure et un modèle dentaire de mâchoire inférieure, dans lequel la détermination et le remplacement de pixels de dents correspondant aux dents (31) de la mâchoire supérieure et la détermination et le remplacement de pixels de dents correspondant aux dents (31) de la mâchoire inférieure sont réalisés par la suite.

10. Procédé selon l'une quelconque des revendications précédentes,
**caractérisé par**
le fait de déterminer, avant d'utiliser l'algorithme de retouche, si des pixels de dents sont visibles lorsque l'image (20) est recouverte du modèle dentaire (1), dans lequel la visibilité est déterminée seulement pour ces pixels de dents qui correspondent à des dents (31) d'une mâchoire au niveau de laquelle des dents du modèle dentaire (1) virtuel sont positionnées.

11. Procédé selon l'une quelconque des revendications précédentes,
**caractérisé en ce que**
l'image (20) fait partie d'un flux d'images, et le procédé est réalisé en temps réel pour au moins une multitude d'images (20) du flux d'images.

12. Procédé selon la revendication 11,
**caractérisé en ce que**
le procédé comprend en outre une capture du flux d'images au moyen d'une caméra (4) et une visualisation du modèle dentaire (1) et de l'image (20) bidimensionnelle sur un dispositif d'affichage (12) à destination d'un utilisateur, en particulier dans lequel le visage est le visage de l'utilisateur,
en particulier dans lequel la caméra (4) et le dispositif d'affichage (12) font partie du même dispositif mobile (10),
dans lequel le procédé est réalisé au moyen d'un ou plusieurs algorithmes installés sur une unité informatique du dispositif mobile (10).

13. Procédé selon l'une quelconque des revendications précédentes,
**caractérisé en ce que**
le modèle dentaire (1) virtuel est dans un format de maillage par polygones et comprend une pluralité de sommets.

14. Dispositif mobile (10) comprenant une caméra (4) et un écran (12) qui agencés de façon à ce que des images (20) du visage d'un utilisateur puissent être capturées par la caméra (4) tandis que l'utilisateur regarde l'écran (12),
**caractérisé en ce que**
le dispositif comprend une unité informatique avec au moins un algorithme qui est adapté pour réaliser le procédé de l'une des revendications précédentes.

15. Produit programme d'ordinateur comprenant un code de programme qui est stocké sur un support lisible par machine, ou prenant la forme d'une onde électromagnétique comprenant un segment de code de programme, et présentant des instructions exécutables par ordinateur pour réaliser le procédé selon l'une quelconque des revendications 1 à 13, en particulier lorsqu'elles sont exécutées sur l'unité informatique du dispositif mobile (10) selon la revendication 14.
